# EUROPEAN PATENT SPECIFICATION

(11) **EP 1 489 919 B1**
(45) Date of publication and mention of the grant of the patent: **13.01.2010**
(21) Application number: 03708743.4
(22) Date of filing: 11.03.2003
(51) Int. Cl.: A23K 1/00, C11B 5/00, A23D 9/06

(54) **FEED FOR AQUATIC SPECIES**
FUTTER FÜR WASSERTIERE
ALIMENT POUR ESPECES AQUATIQUES

(30) Priority: 14.03.2002 NO 20021265
(43) Date of publication of application: 29.12.2004
(73) Proprietor: Pronova BioPharma Norge AS, 1327 Lysaker (NO)
(72) Inventor: BREIVIK, Harald, N-3942 Porsgrunn (NO); KULAS, Elin, N-3907 Langesund (NO); AASBO, Kari, N-3719 Skien (NO); AANESEN, Berit, Annie, N-3737 Skien (NO); SANNA, Lola, Irene, N-3910 Porsgrunn (NO)
(74) Representative: Wallace, Sheila Jane
(86) International application number: PCT/NO2003/000084
(87) International publication number: WO 2003/075677

(56) References cited:
- WO-A1-00/01249
- WO-A1-01/46355
- WO-A1-96/12415
- DASKALOV H. ET AL.: 'Influence of oxidized lipids in diets on the development of rainbow trout fry syndrome' JOURNAL OF FISH DISEASES vol. 23, no. 1, January 2000, pages 7 - 14, XP002966410
- OLSEN R.E. ET AL.: 'The influence of temperature, dietary polyunsaturated fatty acids, a-tocopherol and spermine on fatty acid composition and indices of oxidative stress in juvenile arctic char, salvelinus alpinus (L.)' FISH PHYSIOLOGY AND BIOCHEMISTRY vol. 20, no. 1, January 1999, pages 13 - 29, XP002966411
- WAAGBO R.: 'The impact of nutritional factors on the immune system in Atlantic salmon, salmo salar L.: a review' AQUACULTURE AND FISHERIES MANAGEMENT vol. 25, 1994, pages 175 - 197, XP002966412

## Description

This invention relates to a feed for aquatic species including fry.

A problem for the aquaculture industry has been degradation and low quality of the fat components in the feed due to oxidation. This problem has previously been focused on farming of salmonids.

When marine fat, which is the main fat source in fish feed, reacts with oxygen, firstly primary oxidation products like peroxides are formed. The level of primary oxidation products is normally analysed as peroxide value. Peroxides from polyunsaturated fat are unstable and easily degraded, resulting in transformation to secondary oxidation products.

Secondary oxidation products are a complex group of compounds including aldehydes and ketones. To quantify the amount of secondary oxidation products the anisidine value is measured. The anisidine value is the intensity of a colour that develops during reaction between the reagent anisidine and aldehydes in the fat. The anisidine value is given without denomination.

The level of oxidation in a fat is often given as totox-value. The totox-value is two times the peroxide value added with the anisidine value.

In feed for salmonids oils having low totox-values should be used In order to secure optimal growth for the fish.

In Norwegian Patent No. 309795 (corresponding to International patent application No. WO 00/01249) in the name of the present Applicant, a method for stabilising vegetable and animal oils by treating the oil by urea and optionally one or more antioxidants, and a feed for salmonids comprising inter alia oils treated by the said method are disclosed. Norwegian Patent No. 311041 (corresponding to International patent application No. WO 01/46355) also in the name of the present Applicant, further discloses a method for stabilising similar oils by treatment of one or more other amines or amides. In NO-309795 and NO-311041 it is reported that by producing astaxanthin-containing fish feed for salmonids with oil produced according to said methods, the degradation of astaxanthin during extrusion of feed pellets is considerably reduced.

At the time when NO-309795 and NO-311041 were filed, the aquaculture industry was focused on farming of salmonids. The aim of the said inventions was to reduce the degradation of astaxanthin and similar pigments, the most expensive components of fish feed. Now, however, other marine species have also become an object of the aquaculture industry. These species, like cod and halibut, face the fish farming industry with new challenges. Feed for these species normally does not contain significant amount of carotenoids like astaxanthin or canthaxanthin. However, so far it seems as if these species are more difficult to raise with optimum health and growth. One problem is related to low survival and low growth rate of fry and small fish.

In production of such marine species breeding of fry is a problem. The mortality of the fry is very high. In addition the rate of weight gain, especially of small fish, is lower than desired. One reason for this is that the fish is sensitive to oxidative stress. When the fish is fed a highly oxidized feed, the oxidative stress becomes high.

Thus, it is desirable to have access to a feed for the marine species and fry thereof where the oxidative stress of the feed is minimal.

The present invention is in a surprising manner able to provide a feed more suitable for marine species and fry in particular, than previously known feed.

The essential features of the present invention are given in the accompanying claims.

A person skilled in the art will realize that a feed according to the present invention will be useful for all aquatic species and crustaceans.

A feed for aquatic species including fry, containing lipids that comprises one or more marine oils and/or vegetable oils treated by urea and/or other amines or amides and optionally one or more antioxidants is disclosed in the present invention.

The above-mentioned amines and amides are defined by the general formula: 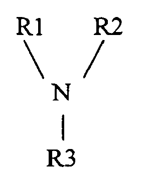 wherein each of R1, R2 and R3 are independently chosen from H, C₁-C₁₀-alkyl, C₂-C₁₀-alkenyl, or RC(O)- or RN(H)-C(O)-C(O)- where R is H, C₁-C₁₀-alkyl or C₂-C₁₀-alkenyl, or R'N(H)-C(O)- where R' is C₁-C₁₀-alkyl, C₂-C₁₀-alkenyl, or H if at least two of R1, R2 and R3 are different from H.

According to one embodiment of the invention oils are heated in presence of urea and/or other amines or amides, preferably above the melting point of the nitrogen containing compound(s) and preferably kept at this temperature for a time period of approximately 20-30 minutes, and one or more antioxidants may be added. According to another embodiment of the invention the oil is reacted with an aqueous mixture of 0.1-50% of urea and/or other amines or amides, preferably 0.5-5% of urea and/or other amines or amides. The preferred antioxidants are tocopherol and/or ascorbic acid, and tocopherol and/or ascorbyl palmitate.

The invention also discloses the use of one or more marine oil and/or vegetable oil treated by urea and/or other amines or amides and optionally one or more antioxidants for production of a feed for marine species including fry, which reduces degradation of the feed with regard to oxidation.

A preferred feature of this invention is that the oil is treated with urea and/or other amines or amides and added to the feed before or after extrusion. The oil is treated either by heating in the presence of the nitrogen containing compound(s), or by reacting with an aqueous mixture of nitrogen containing compound(s). Preferably the urea and/or amines and amides are removed from the oil, e.g. by filtration, before the oil is added to the feed.

Another feature of the invention is that the nitrogen containing compound(s) is added directly to the feed mixture, either in an aqueous phase or in solid form.

The nitrogen containing compound(s) may however be added in a number of ways and not only directly to an oil. By production of a feed urea and/or other amines or amides can be added for instance during the extruding, by vacuum coating, spray coating and by oil bath. The nitrogen containing compound(s) can also be added in the water phase or in solid form.

A preferred nitrogen-containing compound according to this invention is urea.

Among the marine species, cod and halibut are among the species that are of interest in the aqua culture industry.

In the following the invention will be further explained by examples and a figure. The examples are just meant to be illustrative and shall not be considered as limiting.

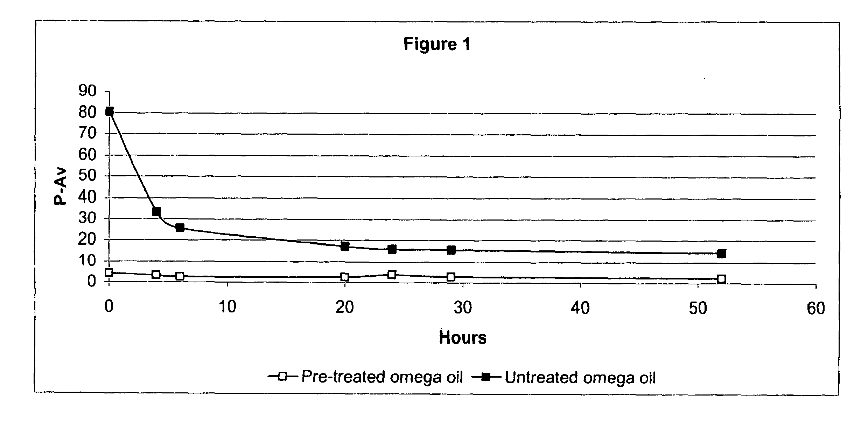

Figure 1 shows secondary oxidation products expressed in anisidine number for omega oils treated with fish meal. Results for oils pre-treated with urea and oils not pre-treated with urea are shown.

### Example 1

Fish feed is extruded according to a recipe identical to Example 7 of NO-309795. The extruded and dried feed pellets are analysed by using Electron Spin Resonance. This is a method for elucidating the presence and relative concentration for free radicals. Free radicals are associated with ongoing oxidation; i.e. a high level of free radicals in a sample is associated with a high oxidative stress of that sample.

### Results:

| | ESR (pp-amp) |
|---|---|
| Fish meal and wheat flour | 2.0 |
| Fish meal and wheat flour plus fish oil | 1.7 |
| Fish meal and wheat flour plus fish oil. Heated at 125°C for 5 min. | 2.8 |
| Pellets, commercial formula | 2.8 |
| Pellets, urea-treated oil in extruder | 1.7 |

The ESR-results (pp-amp) give an indication of the concentration of free radicals in the sample. A high numerical number indicate a high level of free radicals. The mixture of fish meal and wheat flour used for the fish feed gave a numerical result of 2.0 on this relative scale. When fish oil was added, the value was 1.7. After heating a sample of this mixture for 5 minutes at 125°C, simulating extrusion, the value had increased to 2.8. This was identical to the value after extrusion and drying for feed pellets produced from the same mixture of meal, flour and oil. However, when the oil was substituted with an oil treated with urea according to the present invention, the value was 1.7 also after extrusion. Surprisingly, the extrusion process had not resulted in an increase in free radical activity of the dried pellets.

This shows that the present invention gives a feed that reduces the oxidative stress of a feed composition.

The positive effect of the invention in showing a reduced oxidation of fish feed can be shown by storing samples of feed in an atmosphere of oxygen, and under increased pressure, with continuous recording of oxygen consumption. The oxygen consumption is lower when an oil according to the present invention is used, compared to feed produced with untreated oil.

### Example 2

A South American fish oil intended for fish feed ("omega oil") mixed with 20 % (low temperature) LT fishmeal was heated to 60°C with stirring. The oil was left for 30 minutes.

Initially the oils treated in this way (control) had an anisidine number of 20.

For the aliquots of this oil treated according to NO-309795 (i.e.; heated with urea, cooled, and filtrating off the urea) the initial anisidine numbers were 2.

As can be seen in Fig. 1, the anisidine number of the control is rapidly reduced. It is assumed that this is due to a reaction between amino acids/protein compounds and carbonyl compounds (i.e. secondary oxidation products), and that a similar reaction takes place during feed production. It is further assumed that this is unfavourable for the value of the feed, which again indicates that commonly manufactured feed gives disadvantageous effects. Commercially available feed makes the proteins less bioavailable for the fish and/or they decompose in the intestine of the fish and thereby secondary oxidation products are released.

Wild fish do not experience the problems mentioned above, as wild fish do not eat oxidized feed.

By the feed according to the present invention, the oxidation problems nearly are solved. The present invention provides a feed of improved quality.

The main object of the present invention is to provide a feed for marine species, included fry, where the oxidative stress of the feed due to fat oxidation is minimal. By treating the marine and/or vegetable oils in the feed by urea and/or other amines or amides as given above, this object is fulfilled. The feed according to the present invention is due to its minimal oxidative stress particularly suitable for marine species and fry. It is assumed that oxidative stress is one reason for the health problems, low survival and growth rate of fry and small fish. By feeding a feed according to the present invention to these species, fish of improved quality with regard to health, growth and survival are obtained. The possibility by using a feed with a minimal oxidative stress given by the present invention is a very important contribution within farming of marine species in the aquaculture industry.

Furthermore, heart rupture is a survival/health problem for salmonids and other farmed fish species. This particular health problem is assumed occur due to oxidative stress in the feed. Thus, using the feed according to the present invention is suitable also for salmonids in order to reduce the heart rupture problems of the fish.

By applying the method for stabilising vegetable and marine oils as disclosed in NO-309795 and NO-311041, lipids causing oxidative stress in feed for marine species are obtained. In this way a feed for marine species and fry in particular, that causes less oxidative stress to the fish is obtained. This feed is also suitable for salmonids, particularly for reducing the occurrence of heart rupture.

The present invention implies an improved solution to the breeding problem of fry of marine species as described above. A satisfactory solution to this problem has previously not been found.

The person skilled in the art will realise that similar problems related to non-optimal growth and health due to oxidative stress from the feed will be relevant to all aquatic species, not only fish.

## Claims

1. Use of one or more marine oil and/or vegetable oil treated by urea and/or other amines or amides of formula (I),
wherein the said amines and amides are defined by the general formula (I): 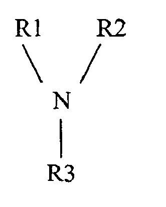 wherein each of R1, R2 and R3 are independently chosen from H, C₁-C₁₀-alkyl, C₂-C₁₀-alkenyl, or RC(O)- or RN(H)-C(O)-C(O)- where R is H, C₁-C₁₀-alkyl or C₂-C₁₀-alkenyl, or R'N(H)-C(O)- where R' is C₁-C₁₀-alkyl, C₂-C₁₀-alkenyl, or H if at least two of R1, R2 and R3 are different from H,
and optionally one or more antioxidants, for production of a feed for marine species including fry, which reduces degradation of the feed.

2. Use of one or more marine oil and/or vegetable oil treated by urea and/or other amines or amides of formula (I) as defined in claim 1, and optionally one or more antioxidants, for production of a feed for marine species including fry for improving the health condition, and survival and growth rate of the fish.

3. Use for production of feed according to claim 1 or claim 2, for all aquatic species and crustaceans.

4. Use of one or more marine oil and/or vegetable oil treated by urea and/or other amines or amides of formula (I) as defined in claim 1, and optionally one or more antioxidants, for production of a feed for marine species and salmonids for reducing occurrence of heart rupture of the fish.

## Patentansprüche

1. Verwendung eines oder mehrerer Seetieröle und/oder Pflanzenöle, die mit Harnstoff und/oder anderen Aminen oder Amiden gemäß Formel (I) behandelt sind,
wobei die Amine und Amide durch die allgemeine Formel (I) definiert sind: 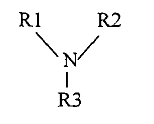
wobei R1, R2 und R3 jeweils unabhängig voneinander unter H, einem C₁-C₁₀-Alkyl, C₂-C₁₀-Alkenyl oder RC(O)- oder RN(H)-C(O)-C(O)-, wobei R für H, ein C₁-C₁₀-Alkyl oder C₂-C₁₀ Alkenyl steht, oder RN(H)-C(O)- ausgewählt sind, wobei R' für ein C₁-C₁₀-Alkyl, C₂-C₁₀-Alkenyl oder H steht, wenn mindestens zwei von R1, R2 und R3 von H verschieden sind,
und wahlweise eines oder mehrerer Antioxidationsmittel für die Herstellung eines Futters für Seetierarten, einschließlich Fischbrut, wodurch die Zersetzung des Futters vermindert wird.

2. Verwendung eines oder mehrerer Seetieröle und/oder Pflanzenöle, die mit Harnstoff und/oder anderen Aminen oder Amiden gemäß der in Anspruch 1 definierten Formel (I) behandelt sind, und wahlweise eines oder mehrerer Antioxidationsmittel für die Herstellung eines Futters für Seetierarten, einschließlich Fischbrut, zur Verbesserung des Gesundheitszustands und der Überlebens- und Wachstumsrate des Fischs.

3. Verwendung für die Herstellung von Futter nach Anspruch 1 oder Anspruch 2 für alle Wassertierarten und Krebstiere.

4. Verwendung eines oder mehrerer Seetieröle und/oder Pflanzenöle, die mit Harnstoff und/oder anderen Aminen oder Amiden gemäß der in Anspruch 1 definierten Formel (I) behandelt sind, und wahlweise eines oder mehrerer Antioxidationsmittel für die Herstellung eines Futters für Seetierarten und Salmoniden zur Verminderung des Auftretens von Herzrupturen des Fischs.

## Revendications

1. Utilisation d'une ou de plusieurs huiles marines et/ou huiles végétales traitées par urée et/ou d'autres amines ou amides de la formule (I),
dans laquelle lesdites amines et lesdits amides sont définis par la formule générale (I): 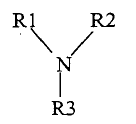 dans laquelle chacun de R1, R2 et R3 sont indépendamment choisis parmi H, un alkyle C₁-C₁₀, un alcényle C₂-C₁₀, ou RC(O)- ou RN(H)-C(O)-C(O)- où R est H, un alkyle C₁-C₁₀ ou un alcényle C₂-C₁₀, ou R'N(H)-C(O)- où R' est un alkyle C₁-C₁₀, un alcényle C₂-C₁₀, ou H si au moins deux de R1, R2 et R3 sont différents de H,
et optionnellement d'un ou de plusieurs antioxydants, pour la production d'un aliment pour des espèces marines incluant des alevins, qui réduit la dégradation de l'aliment.

2. Utilisation d'une ou de plusieurs huiles marines et/ou huiles végétales traitées par urée et/ou d'autres amines ou amides de la formule (I), telle que définie dans la revendication 1, et optionnellement d'un ou de plusieurs antioxydants, pour la production d'un aliment pour des espèces marines incluant des alevins pour améliorer l'état de santé et les taux de survie et de croissance du poisson.

3. Utilisation pour la production d'un aliment selon la revendication 1 ou la revendication 2, pour toutes les espèces aquatiques et les crustacés.

4. Utilisation d'une ou de plusieurs huiles marines et/ou huiles végétales traitées par urée et/ou d'autres amines ou amides de la formule (I), telle que définie dans la revendication 1, et optionnellement d'un ou de plusieurs antioxydants, pour la production d'un aliment pour des espèces marines et des salmonidés pour réduire l'occurrence d'une rupture cardiaque du poisson.
